# EUROPEAN PATENT SPECIFICATION

(11) **EP 2 966 211 B1**
(45) Date of publication and mention of the grant of the patent: **28.02.2018**
(21) Application number: 15168172.3
(22) Date of filing: 19.05.2015
(51) Int. Cl.: D06F 37/06, D06F 37/14

(54) **WASHING MACHINE AND WASHING METHOD THEREOF**
WASCHMASCHINE UND WASCHVERFAHREN DAFÜR
MACHINE À LAVER ET SON PROCÉDÉ DE LAVAGE

(30) Priority: 09.07.2014 KR 20140086050
(43) Date of publication of application: 13.01.2016
(73) Proprietor: Dongbu Daewoo Electronics Corporation, Seoul 135-523 (KR)
(72) Inventor: KIM, In Dong, 135-523 Seoul (KR)
(74) Representative: Rau, Schneck & Hübner Patentanwälte Rechtsanwälte PartGmbB

(56) References cited:
- EP-A1- 1 816 250
- WO-A1-2011/080119
- US-A- 4 971 449
- US-A- 5 509 283
- US-A1- 2004 118 168

## Description

### CROSS-REFERENCE TO RELATED APPLICATION

This application is based on and claims priority to Korean Patent Application No. 2014-0086050, filed on July 9, 2014.

### TECHNICAL FIELD

Embodiments according to the present invention relate to a washing machine with an auxiliary washing unit, and a washing method using such a washing machine, to improve washing performance.

### BACKGROUND

A washing machine uses power from an electric motor as main power, and performs washing, rinsing, and dehydrating (e.g., spin-drying) processes to clean laundry through the action of detergent and water. The washing machine includes the electric motor, a mechanical part for transferring power to the components used to wash the laundry, a controlling part for controlling the washing process, a water supply apparatus, and a water draining apparatus.

Washing machines may be classified into agitator type washing machines, pulsator type washing machines, and drum type washing machines, depending on their washing schemes. An agitator type washing machine performs washing by horizontally rotating a wing-shaped agitator in the center of a washing tub, and the pulsator type washing machine performs washing using waves generated by rotating a disk-shaped pulsator. A drum type washing machine includes a drum having a plurality of protrusions formed thereon. The drum type washing machine performs washing using the impact generated when the laundry is lifted by a lifter in the drum and then dropped into the wash water and detergent contained in the drum as a result of rotating the drum around a horizontal axis.

A washing machine is for washing the laundry as cleanly as possible. For this purpose, efforts to improve washing performance are ongoing.

As a part of the efforts to improve washing performance, the Applicant applied for a patent application for an apparatus for circulating water remaming between the tub and the drum such that the water between the tub and drum is forced to circulate into the drum. Such an apparatus is disclosed in the Korean Patent Laid-Open Publication No. 2006-0114121, laid-open on November 6, 2006, entitled "REMAINING WATER CIRCULATION SYSTEM FOR A DRUM TYPEWASHING MACHINE." Such an apparatus is configured in a way that when the drum is rotated, washing water remaining between the tub and the drum is drawn up and then falls down into the drum.

Such an apparatus was configured so that the impact of the water falling on the laundry would improve washing performance. However, the improvement was limited.

EP 1 816 250 A1 discloses a washing machine including a rotating drum and a plurality of lifting ribs distributed along the inner surface of the drum. Inside the lifting ribs there is situated a parting wall in the form of a planar member. The partition wall forms two respective closed chambers in the lifting rib. Further, the lifting rib is provided with walls that are inclined relative to each other and are applied with their base sides, respectively, onto the inner surface of the drum. In the said walls there are provided apertures in the region close to the respective base side thereof, i.e., substantially near the surface of drum. Further, in the said walls, perforations are provided at a higher level than the aforesaid apertures from the inner surface of the drum. When the drum of rotates, a washing liquor flows into the mentioned chambers through the apertures in which the respective lifting rib come to lie in its lowest position, and flows out from the perforations.

In this regard, the washing liquor flows into the chambers through the apertures which are provided near the surface of the drum, not the tub. In other words, in the washing machine of this prior art document, the washing liquor flows into the water channel from a side of the inner tank, not from a side of the outer tank.

The washing machine according to WO 2011/080119 A1 includes one or more baffles disposed at the inner surface of the side wall 4 of the drum. In the case when unbalanced load is detected, the control unit controls for decreasing the effect to a minimum by counterbalancing the unbalanced load what is made possible by transferring the required amount of water mechanically and continuously to the desired baffle.

In a washing machine according to US 4 971 449 A an agitating drum rib forms a hollow chamber and is configured to trap a body of air within an agitating drum rib and then cause the air to be pumped out of the rib while it is submerged in laundering or dyeing liquid to produce a bubble agitating effect. That is, the auxiliary washing unit of this prior art (i.e., the agitating drum rib) has nothing to do with the features of the water channels which make the washing water to impact the laundry directly.

Finally, US 5 509 283 A discloses a washing machine the inner tank 30 of which is not be installed rotatably.

### SUMMARY

The present invention provides a washing machine according to claim 1 that includes a special auxiliary washing unit, and a washing method thereof according to claim 5, that improve washing performance by utilizing the speed of flow of the washing water caused by a rotational force generated using an electric motor during a washing cycle and a rinsing cycle, causing the washing water to impact the laundry.

The present invention provides a washing machine, comprising: an outer tank in which washing water can be held; an inner tank which is installed rotatably inside the outer tank; and an auxiliary washing unit which is installed inside the inner tank, wherein the auxiliary washing unit is configured to rotate integrally with the inner tank, and has a first water channel formed therein that is configured so that laundry in the inner tank receives an impact from the washing water which, after flowing into the first water channel from a first side of the outer tank, flows out of the first water channel to the inside of the inner tank by a rotational force generated when the inner tank is rotated in a forward direction, and a second water channel formed therein that is configured so that laundry in the inner tank receives an impact from the washing water which, after flowing into the second water channel from a second side of the outer tank, flows out of the second water channel to the inside of the inner tank by a rotational force generated when the inner tank is rotated in a reverse direction, wherein the auxiliary washing unit comprises a supporting member in which the first water channel and the second water channel are formed; and a projection member which is coupled to and supported by the supporting member and that lifts the laundry by trapping while the inner tank is rotated, and wherein an inlet of each of the first water channel and the second water channel is formed in the supporting member and the inlet is opened in a tangential direction of the inner tank, so that the washing water flowing in from the side of the outer tank flows out to the inside of the inner tank due to the rotational force being generated when the inner tank is rotated, thereby impacting the laundry which is trapped on the projection member.

Each of the first water channel and the second water channel may have a shape in which the inner diameter of the outlet positioned inside the inner tank is narrower than that of an inlet positioned in the side of the outer tank, and the inner diameter is narrower toward the inside of the inner tank and away from the side of the outer tank.

In an embodiment, the outlet may include a nozzle that spouts washing water into the inner tank.

The nozzle may be a circular nozzle, a fan-shaped nozzle, or a porous nozzle, for example.

According to the present invention, a washing method includes rotating an inner tank of the washing machine, thus causing washing water to contact an auxiliary washing unit in the side of an outer tank, by rotation of the inner tank; passing the washing water through a water channel in the washing auxiliary unit and then into the inner tank; and washing laundry through contact with the washing water flowing out of the water channel and into the inner tank.

In embodiments according to the present invention, the speed of flow of the washing water caused by the rotational force generated an electric motor, which is a power unit for a washing cycle and a rinsing cycle, causes the washing water to directly impact the laundry, thereby improving washing performance.

### BRIEF DESCRIPTION OF THE DRAWINGS

FIG. 1 is a front view of a washing machine in an embodiment according to the present invention.
FIG. 2 is a front view of an auxiliary washing unit in a washing machine in an embodiment according to the present invention.
FIG. 3 is a side view of an auxiliary washing unit in a washing machine in an embodiment according to the present invention.
FIG. 4 is a top view of an auxiliary washing unit in a washing machine in an embodiment according to the present invention, which shows an example using a circular nozzle.
FIG. 5 is a top view of an auxiliary washing unit in a washing machine in an embodiment according to the present invention, which shows an example using a fan-shaped nozzle.
FIG. 6 is a top view of an auxiliary washing unit in a washing machine in an embodiment according to the present invention, which shows an example using a porous nozzle.
FIG. 7 is a top view of an auxiliary washing unit in a washing machine in an embodiment according to the present invention, which shows a path that washing water stored in an outer tank takes into a water channel and then toward the inside of the inner tank.
FIG. 8 is a front view of a washing machine with an auxiliary washing unit in an embodiment according to the present invention, which shows a path that washing water stored in an outer tank takes into a water channel of the auxiliary washing unit and then toward the inside of the inner tank.
FIG. 9 is a flowchart illustrating a washing method using a washing machine with an auxiliary washing unit in an embodiment according to the present invention.

### DETAILED DESCRIPTION

Hereinafter, embodiments according to the present invention will be described in detail with reference to the accompanying drawings.

In the following description, well-known functions or components will not be described in detail to avoid unnecessarily obscuring aspects of the present invention.

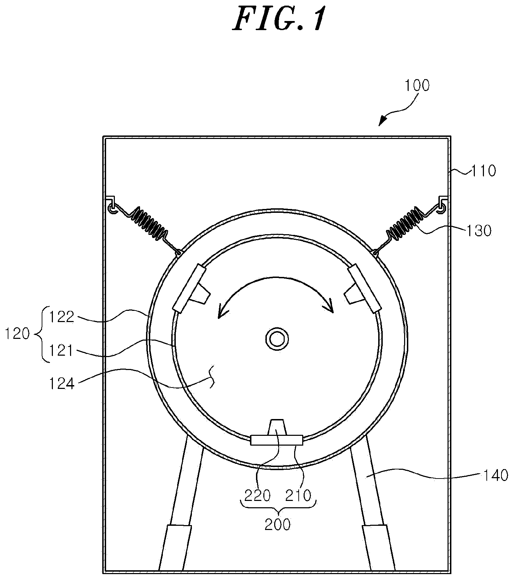

FIG. 1 is a schematic front view of a washing machine in an embodiment according to the present invention.

Referring to FIG. 1, a washing machine 100 in an embodiment according to the present invention includes a cabinet 110 forming the exterior, a washing body 120 for washing laundry, and an auxiliary washing unit 200 that improves washing performance.

The cabinet 110 is formed in a shape that accommodates and supports the washing body 120. For example, the cabinet 110 may have a hexahedral shape. Also, a control panel (not shown) that includes buttons and the like is provided in the front or upper surface of the cabinet 110 so that a user can select a washing function.

In an embodiment, the washing body 120 is disposed inside the cabinet 110 and includes an inner tank 121 which is installed so that it can be rotated by a motor that has a horizontal rotating shaft. In an embodiment, the washing body 120 includes an outer tank 122 which supports the inner tank 121 and can hold water for washing. If the washing machine 100 is a drum type washing machine, then the inner tank 121 may be referred as a drum, and the outer tank 122 may be referred to as a tub.

As mentioned above, the inner tank 121 can rotate on a shaft that is parallel with the ground (hereinafter, referred to as "the horizontal direction") on which the cabinet 110 is disposed. The inner tank 121 may have a cylindrical shape with an open end which may be opened and closed selectively by a door (not shown). In addition, a washing space 124 in which the laundry can be washed is provided in the inner tank 121.

The upper portion of the outer tank 122, which supports the inner tank 121, may be fixed elastically to the cabinet 110 by an elastic member 130 such as a spring, and the lower portion of the outer tank 122 may be supported by a fixing member 140. The fixing member 140 may be a dampener which can reduce vibration caused by rotation of the inner tank 121.

In an embodiment, the auxiliary washing unit 200 includes a supporting member 210 which rotates integrally with the inner tank 121. Also, in an embodiment, the auxiliary washing unit 200 further includes a projection member 220 which is supported by coupling to the supporting member 210 so that it projects toward the inside of the inner tank 121, and is configured so that laundry in a washing space 124 of the inner tank 121 will be lifted by trapping it with the projection member and then dropped while the inner tank 121 is rotated. In another embodiment, the supporting member 210 is formed high enough so that laundry in the washing space 124 will be lifted by trapping it with the supporting member, in which case the projection member 220 may be excluded from the design.

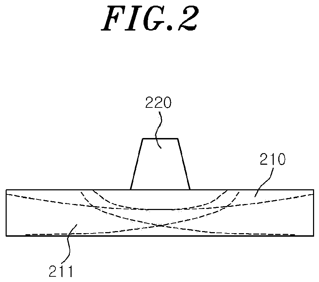

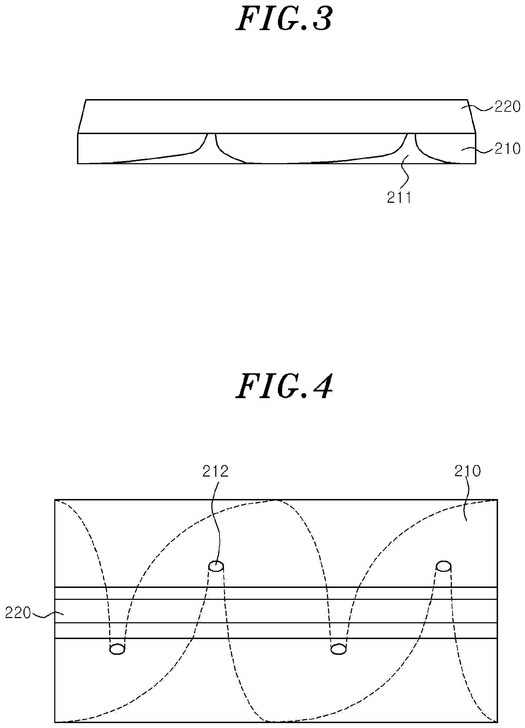

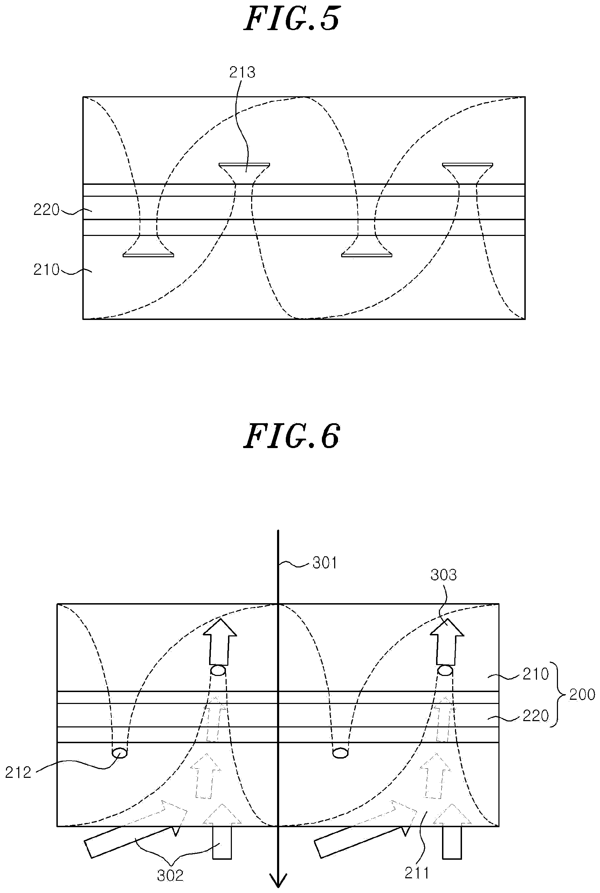

FIG. 2 is a front view of an auxiliary washing unit that can be used in a washing machine in an embodiment according to the present invention. FIG. 3 is a side view of an auxiliary washing unit in a washing machine in an embodiment according to the present invention. FIG. 4 is a top view of an auxiliary washing unit in a washing machine in an embodiment according to the present invention, which shows an example using a circular nozzle. FIG. 5 is a top view of an auxiliary washing unit in a washing machine in an embodiment according to the present invention, which shows an example using a fan-shaped nozzle. FIG. 6 is a top view of an auxiliary washing unit in a washing machine in an embodiment according to the present invention, which shows an example using a porous nozzle.

Referring to FIGs. 2 through 6, a water channel 211 is formed in the supporting member 210 of the washing auxiliary unit 200 in an embodiment according to the present invention. The water channel 211, which is configured so that laundry trapped by the projection member 220 will be impacted by washing water which, after flowing in from the side of the outer tank, flows out to the inside of the inner tank due to the rotational force being generated when the inner tank is rotated. As shown in FIGs. 4 through 6, the water channel 211 is formed inside of the supporting member 210, and is shown as a dotted line.

In an embodiment, the water channel 211 has a shape such that the inner diameter of the outlet positioned inside of the inner tank 121 is narrower than that of the inlet positioned in the side of the outer tank 122, and also the inner diameter is narrower toward the inside of the inner tank 121 and away from the side of the outer tank 122. Further, around the outlet of the inside of the inner tank 121, a nozzle which directs washing water toward the inside of the inner tank 121 is formed. The nozzle may be any one of various shapes, such as but not limited to a circular nozzle or a fan-shaped nozzle 213.

Also, as the inner tank 121 is repeatedly rotated forward and in reverse during a washing cycle and a rinsing cycle, washing water in the supporting member 210 moves in the forward direction, in which the washing water moves forward after flowing in while the inner tank 121 is rotated in the forward direction, and in the reverse direction, in which the washing water moves in reverse after flowing in while the inner tank 121 is rotated in the reverse direction.

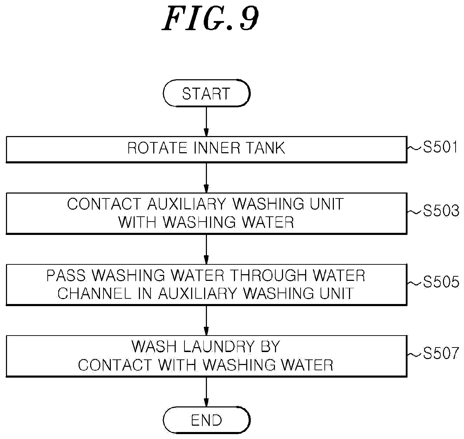

FIG. 9 is a flowchart illustrating a washing method using a washing machine with an auxiliary washing unit in an embodiment according to the present invention.

As described in FIG. 9, the washing method in an embodiment according to the present invention includes rotating the inner tank (block S501).

The washing method further includes the washing water in the side of the outer tank getting in contact with the auxiliary washing unit while the inner tank is rotating (block S503).

Next, the washing method further includes the washing water passing through the water channel formed in the auxiliary washing unit and flowing out to the inside of the inner tank (block S505).

Finally, the washing method further includes washing the laundry by contacting the laundry with the washing water that flows out of the water channel to the inside of the inner tank as mentioned above (block S507).

Hereinafter, operation of a washing machine according to an aspect of the present invention will be described.

First, during a washing cycle or a rinsing cycle, washing water is held in the outer tank 122, and the inner tank 121 is rotated by a motor that has a rotational shaft that is disposed horizontally to the ground, at block S501.

In an embodiment, laundry in the washing space 124 is lifted and dropped repeatedly by the projection member 220 of the auxiliary washing unit 200 while the inner tank 121 is rotated. That is, the projection member 220 performs a function similar to a lifter in a drum type washing machine. In another embodiment, laundry is lifted and dropped repeatedly by the supporting member 210 in lieu of the projection member 220 as described above.

When the inner tank 121 is rotated as described above, the auxiliary washing unit 200 is contacted by the washing water in the outer tank 122, at block S503, and the washing water in the outer tank 122 flows into the water channel 211 in the supporting member 210 of the auxiliary washing unit 200 due to the rotational force of the inner tank 121, and then passes through then out of the water channel to the inside of the inner tank 121, at block S505. That is, washing water spouts from the circular nozzle 212, the fan-shaped nozzle 213, or the porous nozzle 214 positioned in the inner tank 121. Accordingly, the laundry trapped by the projection member 220 is contacted by the washing water and is impacted by the flow of the washing water, and is thereby washed, at block S507. For example, the circular nozzle 212 can direct an impact intensely to a specific part of the laundry, and the fan-shaped nozzle 213 can direct an impact to larger area of the laundry.

Because, in an embodiment, the water channel 211 has a shape such that the inner diameter of the outlet positioned in the inside of the inner tank 121 is narrower than that of the inlet positioned in the side of the outer tank 122, the speed of the washing water passing through the water channel 211 is increased as the water flows toward the outlet from the inlet, and increases further while passing through the circular nozzle 212 or the fan-shaped nozzle 213, thereby providing sufficient impact to the laundry trapped by the projection member 220.

For example, as shown in FIG. 6, when the auxiliary washing unit 200 proceeds in the direction of the arrow 301 due to rotation of the inner tank 121, the washing water flows into and through the water channel 211 in the supporting member 210 in the direction of the arrow 302 and spouts out of the water channel in the direction of the arrow 303 via the circular nozzle 212. As shown in FIG. 6, for example, the water channel 211 is formed in the supporting member 210, which is shown using dotted lines.

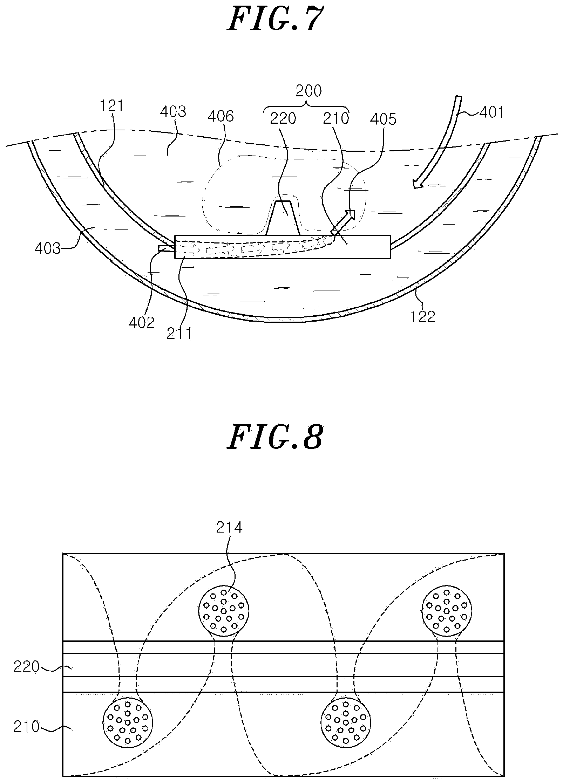

Further, as shown in FIG. 7, when the inner tank 121 is rotated in the direction of the arrow 401, the washing water 403 flows into and through the water channel 211 in the supporting member 210 in the direction of the arrow 402 and spouts out of the water channel and into the inner tank 121 in the direction of the arrow 405. Consequently, laundry that is trapped on the projection member 220 is subject to an impact caused by the speed of flow of the washing water 403 out of the water channel/nozzle.

Thus, as described above, in an embodiment according to the present invention, when the inner tank 121 is rotated during the washing cycle or the rinsing cycle, washing water passing through the auxiliary washing unit 200 impacts the laundry which is trapped on the projection member 220, thereby improving washing performance.

## Claims

1. A washing machine (100), comprising:
an outer tank (122) in which washing water can be held;
an inner tank (121) which is installed rotatably inside the outer tank (122); and
an auxiliary washing unit (200) which is installed inside the inner tank (121) and is configured to rotate integrally with the inner tank (121), the washing machine (100) **characterized in that**:
the auxiliary washing unit (200) has a first water channel (211) formed therein that is configured so that laundry in the inner tank (121) receives an impact from the washing water which, after flowing into the first water channel (211) from a first side of the outer tank (122), flows out of the first water channel (211) to the inside of the inner tank (121) by a rotational force generated when the inner tank (121) is rotated in a forward direction, and a second water channel (211) formed therein that is configured so that laundry in the inner tank (121) receives an impact from the washing water which, after flowing into the second water channel (211) from a second side of the outer tank (122), flows out of the second water channel (211) to the inside of the inner tank (121) by a rotational force generated when the inner tank (121) is rotated in a reverse direction, wherein the auxiliary washing unit (200) comprises
a supporting member (210) in which the first water channel (211) and the second water channel (211) are formed; and
a projection member (220) which is coupled to and supported by the supporting member (210) and that lifts the laundry by trapping while the inner tank (121) is rotated, and
wherein an inlet of each of the first water channel (211) and the second water channel (211) is formed in the supporting member (210) and the inlet is opened in a tangential direction of the inner tank (121), so that the washing water flowing in from the side of the outer tank (122) flows out to the inside of the inner tank (121) due to the rotational force being generated when the inner tank (121) is rotated, thereby impacting the laundry which is trapped on the projection member (220).

2. The washing machine (100) of claim 1, wherein each of the first water channel (211) and the second water channel (211) has a shape such that an inner diameter of an outlet of said each of the first water channel (211) and the second water channel (211) positioned in the inside of the inner tank (121) is narrower than that of an inlet of said each of the first water channel (211) and the second water channel (211) positioned in the side of the outer tank (122), and an inner diameter of said each of the first water channel (211) and the second water channel (211) is narrower toward the inside of the inner tank (121) and away from the side of the outer tank (122).

3. The washing machine (100) of claim 2, wherein the outlet comprises a nozzle (212, 213, 214) which spouts the washing water into the inner tank (121).

4. The washing machine (100) of claim 3, wherein the nozzle is selected from the group including a circular nozzle (212), a fan-shaped nozzle (213), and a porous nozzle (214).

5. A washing method, comprising:
rotating an inner tank (121) of a washing machine (100), wherein the rotation of the inner tank (121) causes an auxiliary washing unit (200) installed inside the inner tank (121) to contact washing water in the side of an outer tank (122), **characterized in that**:
passing the washing water into and through a first water channel (211) formed in the auxiliary washing unit (200) and then out from the auxiliary washing unit (200) into the inner tank (121) while the inner tank (121) is rotated in a forward direction;
passing the washing water into and through a second water channel (211) formed in the auxiliary washing unit (200) and then out from the auxiliary washing unit (200) into the inner tank (121) while the inner tank (121) is rotated in a reverse direction; and
washing laundry by enabling the laundry to contact the washing water flowing out of the first water channel (211) and the second water channel (211),
wherein the auxiliary washing unit (200) comprises
a supporting member (210) in which the first water channel (211) and the second water channel (211) are formed; and
a projection member (220) which is coupled to and supported by the supporting member (210) and that lifts the laundry by trapping while the inner tank (121) is rotated, and
wherein an inlet of each of the first water channel (211) and the second water channel (211) is formed in the supporting member (210) and the inlet is opened in a tangential direction of the inner tank (121), so that the washing water flowing in from the side of the outer tank (122) flows out to the inside of the inner tank (121) due to the rotational force being generated when the inner tank (121) is rotated, thereby impacting the laundry which is trapped on the projection member (220).

6. The washing method of claim 5, wherein each of the first water channel (211) and the second water channel (211) has a shape in such that an inner diameter of an outlet of said each of the first water channel (211) and the second water channel (211) positioned in the inside of the inner tank (121) is narrower than that of an inlet of said each of the first water channel (211) and the second water channel (211) positioned in the side of the outer tank (122), and an inner diameter of said each of the first water channel (211) and the second water channel (211) is narrower toward the inside of the inner tank (121) and away from the side of the outer tank (122).

7. The washing method of claim 6, wherein the outlet comprises a nozzle which spouts the washing water into the inner tank (121).

8. The washing method of claim 7, wherein the nozzle is selected from the group including a circular nozzle (212), a fan-shaped nozzle (213), and a porous nozzle (214)

## Patentansprüche

1. Eine Waschmaschine (100) umfassend:
einen Außentank (122), in den Wasser aufgenommen werden kann,
einen Innentank (121), der drehbar in dem Außentank (122) gelagert ist, und
eine Zusatz-Wascheinheit (200), die in dem Innentank (121) montiert ist und so ausgebildet ist, dass sie einstückig zusammen mit dem Innentank (121) rotiert, wobei die Waschmaschine (100) **dadurch gekennzeichnet ist, dass**:
die Zusatz-Wascheinheit (200) aufweist einen ersten, darin gebildeten Wasserkanal (211), der so ausgebildet ist, dass Wäsche in dem Innentank (121) einen Stoß von dem Waschwasser erhält, welches, nachdem es von einer ersten Seite des Außentanks (122) in den ersten Wasserkanal (211) eingeströmt ist, aufgrund einer Rotationskraft, die erzeugt wird, wenn der innere Tank (121) in eine Vorwärtsrichtung gedreht wird, aus dem ersten Wasserkanal (211) in das Innere des Innentanks (121) einströmt, sowie einen zweiten, darin gebildeten Wasserkanal (211), der so ausgebildet ist, dass Wäsche in dem Innentank (121) einen Stoß von dem Waschwasser erhält, welches, nachdem es von einer zweiten Seite des Außentanks (122) in den zweiten Wasserkanal (211) eingeströmt ist, aufgrund einer Rotationskraft, die erzeugt wird, wenn der Innentank (121) in eine Rückwärtsrichtung gedreht wird, aus dem zweiten Wasserkanal (211) in das Innere des Innentanks (121) einströmt,
wobei die Zusatz-Wascheinheit (200) umfasst:
ein Stützelement (210), in dem der erste Wasserkanal (211) und der zweite Wasserkanal (211) gebildet sind, und
ein mit dem Stützelement (210) gekoppeltes und hiervon gestütztes Vorsprungelement (220), das die Wäsche erfasst und anhebt, während der Innentank (121) gedreht wird, und
wobei eine Einlassöffnung des ersten Wasserkanals (211) bzw. des zweiten Wasserkanals (211) in dem Stützelement (210) gebildet ist und die Einlassöffnung in eine tangentiale Richtung des Innentanks (121) geöffnet ist, so dass das von der Seite des Außentanks (122) einströmende Waschwasser aufgrund der Rotationskraft, die erzeugt wird, wenn der Innentank (121) gedreht wird, in das Innere des Innentanks (121) strömt und somit auf die Wäsche auftrifft, die von dem Vorsprungelement (220) erfasst ist.

2. Die Waschmaschine (100) gemäß Anspruch 1, wobei der erste Wasserkanal (211) und der zweite Wasserkanal (211) jeweils eine Form derart aufweisen, dass ein Innendurchmesser einer im Inneren des Innentanks (121) angeordneten Auslassöffnung des ersten Wasserkanals (211) bzw. des zweiten Wasserkanals (211) kleiner ist als der einer an der Seite des Außentanks (122) angeordneten Einlassöffnung des ersten Wasserkanals (211) bzw. des zweiten Wasserkanals (211), und dass sich ein Innendurchmesser des ersten Wasserkanals (211) bzw. des zweiten Wasserkanals (211) in Richtung der Innenseite des Innentanks und weg von der Seite des Außentanks (122) hin verjüngt.

3. Die Waschmaschine (100) gemäß Anspruch 2, wobei die Auslassöffnung eine Düse (212, 213, 214) umfasst, die das Waschwasser in den Innentank (121) spritzt.

4. Die Waschmaschine (100) gemäß Anspruch 3, wobei die Düse ausgewählt ist aus der Gruppe umfassend eine kreisförmige Düse (212), eine fächerförmige Düse (213) sowie eine poröse Düse (214).

5. Ein Waschverfahren, umfassend:
ein Rotieren eines Innentanks (121) einer Waschmaschine (100), wobei aufgrund der Rotation des Innentanks (121) eine in dem Innentank (121) montierte Zusatz-Wascheinheit (200) an der Seite eines Außentanks (122) in Kontakt mit Waschwasser kommt, **gekennzeichnet durch**:
ein Leiten des Waschwassers in und durch einen in der Zusatz-Wascheinheit (200) ausgebildeten ersten Wasserkanal (211) und anschließend aus der Zusatz-Wascheinheit (200) in den Innentank (121), während der Innentank (121) in eine Vorwärtsrichtung gedreht wird,
ein Leiten des Waschwassers in und durch einen in der Zusatz-Wascheinheit (200) ausgebildeten zweiten Wasserkanal (211) und anschließend aus der Zusatz-Wascheinheit (200) in den Innentank (121), während der Innentank (121) in eine Rückwärtsrichtung gedreht wird, und
ein Waschen von Wäsche, indem es der Wäsche ermöglicht wird, mit dem aus dem ersten Wasserkanal (211) und dem zweiten Wasserkanal (211) ausströmenden Waschwasser in Kontakt zu kommen, wobei die Zusatz-Wascheinheit (200) umfasst
ein Stützelement (210), in dem der erste Wasserkanal (211) und der zweite Wasserkanal (211) gebildet sind, und
ein mit dem Stützelement (210) gekoppeltes und hiervon gehaltenes Vorsprungelement (220), das die Wäsche erfasst und anhebt, während der Innentank (121) gedreht wird, und
wobei eine Einlassöffnung des ersten Wasserkanals (211) bzw. des zweiten Wasserkanals (211) in dem Stützelement (210) gebildet ist und die Einlassöffnung in eine tangentiale Richtung des Innentanks (121) geöffnet ist, so dass das von der Seite des Außentanks (122) einströmende Waschwasser aufgrund der Rotationskraft, die erzeugt wird, wenn der Innentank (121) gedreht wird, in das Innere des Innentanks (121) strömt und somit auf die Wäsche auftrifft, die von dem Vorsprungelement (220) erfasst ist.

6. Das Waschverfahren gemäß Anspruch 5, wobei der erste Wasserkanal (211) und der zweite Wasserkanal (211) jeweils eine Form derart aufweisen, dass ein Innendurchmesser einer innerhalb des Innentanks (121) angeordneten Auslassöffnung des ersten Wasserkanals (211) bzw. des zweiten Wasserkanals (211) kleiner ist als der einer an der Seite des Außentanks (122) angeordneten Einlassöffnung des ersten Wasserkanals (211) bzw. des zweiten Wasserkanals (211), und dass ein Innendurchmesser des ersten Wasserkanals (211) bzw. des zweiten Wasserkanals (211) sich jeweils in Richtung der Innenseite des Innentanks (121) und weg von der Seite des Außentanks (122) hin verjüngt.

7. Das Waschverfahren gemäß Anspruch 6, wobei die Auslassöffnung eine Düse umfasst, die das Waschwasser in den Innentank (121) spritzt.

8. Das Waschverfahren gemäß Anspruch 7, wobei die Düse ausgewählt ist aus der Gruppe umfassend eine kreisförmige Düse (212), eine fächerförmige Düse (213) und eine poröse Düse (214).

## Revendications

1. Machine à laver (100) comprenant :
une cuve externe (122) dans laquelle l'eau de lavage peut être contenue ;
une cuve interne (121) qui est installée, en rotation, à l'intérieur de la cuve externe (122) ; et
une unité de lavage auxiliaire (200) qui est installée à l'intérieur de la cuve interne (121) et est configurée pour tourner, de manière solidaire, avec la cuve interne (121), la machine à laver (100) étant **caractérisée en ce que** :
l'unité de lavage auxiliaire (200) a un premier canal d'eau (211) formé à l'intérieur de cette dernière, qui est configuré de sorte que le linge, dans la cuve interne (121), reçoit un impact de l'eau de lavage qui, après s'être écoulée dans le premier canal d'eau (211) à partir d'un premier côté de la cuve externe (122), s'écoule hors du premier canal d'eau (211) jusqu'à l'intérieur de la cuve interne (121) par une force de rotation générée lorsque la cuve interne (121) tourne dans une direction avant, et un second canal d'eau (211) formé à l'intérieur de cette dernière, qui est configuré de sorte que, le linge dans la cuve interne (121), reçoit un impact de l'eau de lavage qui, après s'être s'écoulée dans le canal d'eau (211) à partir d'un second côté de la cuve externe (122), s'écoule hors du second canal d'eau (211) jusqu'à l'intérieur de la cuve interne (121) par la force de rotation générée lorsque la cuve interne (121) tourne dans le sens inverse, dans laquelle l'unité de lavage auxiliaire (200) comprend :
un élément de support (210) dans lequel le premier canal d'eau (211) et le second canal d'eau (211) sont formés ; et
un élément de saillie (220) qui est couplé à et supporté par l'élément de support (210) et qui soulève le linge par piégeage, alors que la cuve interne (121) tourne, et
dans laquelle une entrée de chacun parmi le premier canal d'eau (211) et le second canal d'eau (211), est formée dans l'élément de support (210) et l'entrée est ouverte dans une direction tangentielle de la cuve interne (121), de sorte que l'eau de lavage s'écoulant à partir du côté de la cuve externe (122) s'écoule vers l'intérieur de la cuve interne (121) en raison de la force de rotation qui est générée lorsque la cuve interne (121) tourne, impactant ainsi le ligne qui est piégé sur l'élément de saillie (220).

2. Machine à laver (100) selon la revendication 1, dans laquelle chacun parmi le premier canal d'eau (211) et le second canal d'eau (211) a une forme de sorte qu'un diamètre interne d'une sortie de chacun parmi le premier canal d'eau (211) et le second canal d'eau (211), positionnée à l'intérieur de la cuve interne (121), est plus étroit que celui d'une entrée de chacun parmi ledit premier canal d'eau (211) et le second canal d'eau (211), positionnée du côté de la cuve externe (122), et un diamètre interne de chacun parmi ledit premier canal d'eau (211) et le second canal d'eau (211) est plus étroit vers l'intérieur de la cuve interne (121) et à distance du côté de la cuve externe (122).

3. Machine à laver (100) selon la revendication 2, dans laquelle la sortie comprend une buse (212, 213, 214) qui fait jaillir l'eau de lavage dans la cuve interne (121).

4. Machine à laver (100) selon la revendication 3, dans laquelle la buse est sélectionnée dans le groupe comprenant une buse circulaire (212), une buse en forme d'éventail (213) et une buse poreuse (214).

5. Procédé de lavage comprenant les étapes suivantes :
faire tourner une cuve interne (121) d'une machine à laver (100), dans lequel la rotation de la cuve interne (121) amène une unité de lavage auxiliaire (200) installée à l'intérieur de la cuve interne (121) à venir en contact avec l'eau de lavage dans le côté d'une cuve externe (122), **caractérisé par** les étapes suivantes :
faire passer l'eau de lavage dans et à travers un premier canal d'eau (211) formé dans l'unité de lavage auxiliaire (200) et la faire sortir ensuite de l'unité de lavage auxiliaire (200) dans la cuve interne (121) alors que la cuve interne (121) tourne dans une direction avant ;
faire passer l'eau de lavage dans et à travers un second canal d'eau (211) formé dans l'unité de lavage auxiliaire (200) et ensuite la faire sortir de l'unité de lavage auxiliaire (200) dans la cuve interne (121) alors que la cuve interne (121) tourne dans le sens inverse ; et
laver le linge, en permettant au linge de venir en contact avec l'eau de lavage s'écoulant hors du premier canal d'eau (211) et du second canal d'eau (211),
dans lequel l'unité de lavage auxiliaire (200) comprend :
un premier élément de support (210) dans lequel le premier canal d'eau (211) et le second canal d'eau (211) sont formés ; et
l'élément de saillie (220) qui est couplé à et supporté par l'élément de support (210) et qui lève le linge par piégeage, alors que la cuve interne (121) tourne, et
dans lequel une entrée de chacun parmi le premier canal d'eau (211) et le second canal d'eau (211), est formée dans l'élément de support (210) et l'entrée est ouverte dans une direction tangentielle de la cuve interne (121), de sorte que l'eau de lavage s'écoulant à partir du côté de la cuve externe (122) sort en s'écoulant vers l'intérieur de la cuve interne (121) en raison de la force de rotation qui est générée lorsque la cuve interne (121) tourne, impactant ainsi le linge qui est piégé sur l'élément de saillie (220).

6. Procédé de lavage selon la revendication 5, dans lequel chacun parmi le premier canal d'eau (211) et le second canal d'eau (211) a une forme de sorte qu'un diamètre interne d'une sortie de chacun parmi ledit premier canal d'eau (211) et le second canal d'eau (211), positionnée à l'intérieur de la cuve interne (121), est plus étroit que celui d'une entrée de chacun parmi ledit premier canal d'eau (211) et le second canal d'eau (211) positionnée du côté de la cuve externe (122), et un diamètre interne de chacun parmi ledit premier canal d'eau (211) et le second canal d'eau (211) est plus étroit vers l'intérieur de la cuve interne (121) et à distance du côté de la cuve externe (122).

7. Procédé de lavage selon la revendication 6, dans lequel la sortie comprend une buse qui fait jaillir l'eau de lavage dans la cuve interne (121).

8. Procédé de lavage selon la revendication 7, dans lequel la buse est sélectionnée dans le groupe comprenant une buse circulaire (212), une buse en forme d'éventail (213) et une buse poreuse (214).
